(19) Europäisches Patentamt
European Patent Office
Office européen des brevets

(11) **EP 2 764 603 B1**

(12) **FASCICULE DE BREVET EUROPEEN**

(45) Date de publication et mention de la délivrance du brevet:
**13.12.2017 Bulletin 2017/50**

(21) Numéro de dépôt: **12779107.7**

(22) Date de dépôt: **03.10.2012**

(51) Int Cl.:
*H02J 7/00* (2006.01)        *H02J 7/02* (2016.01)
*H02J 50/12* (2016.01)

(86) Numéro de dépôt international:
**PCT/FR2012/052233**

(87) Numéro de publication internationale:
**WO 2013/050699 (11.04.2013 Gazette 2013/15)**

(54) **SYSTEME DE TRANSFERT D'ENERGIE PAR COUPLAGE ELECTROMAGNETIQUE**

ENERGIEÜBERTRAGUNGSSYSTEM DURCH ELEKTROMAGNETISCHE KOPPLUNG

SYSTEM OF ENERGY TRANSFER BY ELECTROMAGNETIC COUPLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2011 FR 1158916**

(43) Date de publication de la demande:
**13.08.2014 Bulletin 2014/33**

(73) Titulaire: **Commissariat à l'Énergie Atomique et aux Énergies Alternatives
75015 Paris (FR)**

(72) Inventeurs:
• **TETU, Yann
F-69740 Genas (FR)**
• **BACQUET, Sylvain
F-38470 Chasselay (FR)**
• **THOMAS, Thierry
F-38760 Varces Allieres et Risset (FR)**

(74) Mandataire: **Thibon, Laurent
Cabinet Beaumont
1, rue Champollion
38000 Grenoble (FR)**

(56) Documents cités:
**WO-A1-2008/137996      WO-A2-2008/030376
US-A1- 2011 199 028**

**Description**

Domaine de l'invention

La présente invention concerne le transfert d'énergie sans fil par couplage électromagnétique. Elle vise plus particulièrement un dispositif d'émission adapté à alimenter simultanément en énergie électrique une pluralité d'appareils électroniques.

Exposé de l'art antérieur

On connaît des systèmes dans lesquels un champ électromagnétique fourni par un dispositif d'émission (émetteur) est utilisé pour alimenter en énergie électrique un appareil électronique (récepteur). Le récepteur est par exemple une lampe, un téléphone sans fil, une brosse à dents électrique, une étiquette électronique, un implant médical, ou tout autre appareil adapté à être télé-alimenté. L'émetteur comprend un générateur de signal alternatif relié à un enroulement conducteur formant une antenne, et des composants électroniques tels que des condensateurs ou des résistances réalisant des fonctions d'accord en fréquence et d'adaptation d'impédance. Le récepteur comprend un enroulement conducteur formant une antenne, et des composants réalisant des fonctions d'accord en fréquence, d'adaptation d'impédance et de redressement. Pour optimiser le transfert d'énergie, les circuits d'antenne de l'émetteur et du récepteur doivent être dimensionnés en fonction du récepteur. Les principaux paramètres sont le nombre de tours des enroulements conducteurs formant les antennes émettrice et réceptrice, les dimensions des antennes, et la distance entre l'antenne émettrice et l'antenne réceptrice.

A titre d'exemple, dans une représentation conventionnelle, l'émetteur est modélisé par un circuit résonant série $R_E L_E C_E$ connecté à un générateur de signal alternatif, et le récepteur est modélisé par un circuit résonant parallèle $R_R L_R C_R$. La résistance $R_E$ correspond à la résistance du circuit d'antenne de l'émetteur, c'est-à-dire à la somme de la résistance propre de l'antenne et d'une éventuelle résistance ajoutée d'adaptation d'impédance, l'inductance $L_E$ correspond à l'inductance de l'antenne de l'émetteur, et le condensateur $C_E$ correspond à une capacité d'accord de la fréquence de résonance de l'émetteur. La résistance $R_R$ correspond à la charge représentée par l'appareil récepteur sur le circuit d'antenne du récepteur, l'inductance $L_R$ correspond à l'inductance de l'antenne du récepteur, et le condensateur $C_R$ correspond à une capacité d'accord de la fréquence de résonance du récepteur.

En pratique, le niveau de tension obtenu, côté récepteur, aux bornes du condensateur $C_R$, dépend (entre autres paramètres tels que la taille des antennes, leurs caractéristiques, et la puissance d'émission) de la distance entre l'antenne émettrice et l'antenne réceptrice. La relation entre la distance entre les antennes et le niveau de tension côté récepteur n'est généralement pas une relation monotone. Les circuits d'émission et de réception sont dimensionnés de façon à permettre un transfert d'énergie optimal à une distance nominale entre le récepteur et l'émetteur.

On s'intéresse ici plus particulièrement aux systèmes dans lesquels un champ magnétique fourni par un émetteur est utilisé pour alimenter simultanément en énergie électrique une pluralité d'appareils récepteurs.

On a déjà proposé un système dans lequel l'émetteur comprend une unique antenne fournissant de l'énergie à une pluralité de récepteurs. Un tel système présente l'avantage d'être de conception simple, mais ne permet pas un transfert d'énergie optimisé entre l'émetteur et les récepteurs.

On a aussi proposé, par exemple dans la demande de brevet US20090140691, un système dans lequel le dispositif d'émission comprend une pluralité d'antennes émettrices, chaque antenne étant accordée de façon privilégiée avec un récepteur. Le dispositif d'émission comprend des circuits de contrôle et de commutation permettant d'activer/désactiver certaines antennes. De plus, des moyens de communication sans fil sont prévus entre le dispositif d'émission et les récepteurs, permettant aux récepteurs de signaler leur présence au dispositif d'émission. Lorsque le dispositif d'émission détecte la présence d'un récepteur, le circuit d'antenne correspondant du dispositif d'émission est activé. Lorsque le récepteur est éloigné du dispositif d'émission, le circuit d'antenne correspondant est désactivé. Un tel système permet un transfert d'énergie optimisé entre le dispositif d'émission et chacun des récepteurs, mais présente l'inconvénient que le dispositif d'émission est relativement complexe.

Résumé

Ainsi, un objet d'un mode de réalisation de la présente invention est de prévoir un dispositif d'émission d'énergie par couplage électromagnétique adapté à alimenter simultanément en énergie électrique une pluralité de récepteurs, ce dispositif palliant tout ou partie des inconvénients des dispositifs connus.

Un objet d'un mode de réalisation de la présente invention est de prévoir un tel dispositif permettant un transfert d'énergie optimisé entre l'émetteur et les récepteurs.

Un objet d'un mode de réalisation de la présente invention est de prévoir un dispositif d'émission d'énergie simple à réaliser.

Un objet d'un mode de réalisation de la présente invention est de prévoir un dispositif d'émission d'énergie par couplage électromagnétique, permettant de recharger simultanément une pluralité d'objets décoratifs lumineux tels que des bougies ou boules à diodes électroluminescentes.

Ainsi, un mode de réalisation de la présente invention prévoit un dispositif d'émission d'énergie par couplage électromagnétique, comportant : un unique générateur fournissant un signal électrique alternatif entre deux bornes ; une succession de modules résonants comprenant chacun un premier condensateur et une première inductance, et des première à quatrième bornes, les première et deuxième bornes d'un premier module étant reliées aux bornes du générateur, et les première et deuxième bornes du ou des autres modules étant connectées aux troisième et quatrième bornes du module de rang précédent.

Selon un mode de réalisation de la présente invention, deux modules résonants consécutifs sont reliés entre eux par une liaison bifilaire.

Selon un mode de réalisation de la présente invention, la liaison bifilaire comprend une paire de fils accolés.

Selon un mode de réalisation de la présente invention, la liaison bifilaire comprend une paire de fils torsadée.

Selon un mode de réalisation de la présente invention, dans chaque module, le premier condensateur et la première inductance sont reliés en série entre les première et troisième bornes, les deuxième et quatrième bornes étant reliées entre elles.

Selon un mode de réalisation de la présente invention, chaque module comprend en outre un deuxième condensateur relié en parallèle à la première inductance.

Selon un mode de réalisation de la présente invention, dans chaque module, le premier condensateur et la première inductance sont reliés en parallèle entre les première et deuxième bornes, les première et troisième bornes étant reliées entre elles, et les deuxième et quatrième bornes étant reliées entre elles.

Selon un mode de réalisation de la présente invention, chaque module comprend en outre un deuxième condensateur entre la première borne et le noeud commun au premier condensateur et à la première inductance.

Selon un mode de réalisation de la présente invention, dans chaque module, le premier condensateur et la première inductance sont reliés en série entre les première et seconde bornes, les première et troisième bornes étant reliées entre elles, et les deuxième et quatrième bornes étant reliées entre elles.

Selon un mode de réalisation de la présente invention, les modules successifs sont connectés de façon que, dans chaque module, le sens de circulation du courant dans l'inductance change par rapport au sens de circulation du courant dans l'inductance du module de rang précédent.

Un autre mode de réalisation de la présente invention prévoit un récepteur comprenant un circuit résonant comportant au moins un condensateur et au moins une inductance, ledit circuit étant adapté à fournir de l'énergie électrique à une charge, en présence d'un champ électromagnétique émis par un dispositif d'émission d'énergie du type susmentionné.

Un autre mode de réalisation de la présente invention prévoit un système d'alimentation en énergie par couplage électromagnétique, comportant : un dispositif d'émission d'énergie du type susmentionné ; et au moins deux récepteurs comprenant chacun un circuit résonant comportant au moins un condensateur et au moins une inductance.

Selon un mode de réalisation de la présente invention, le système d'alimentation est adapté à la recharge, par couplage électromagnétique, d'objets décoratifs lumineux.

Selon un mode de réalisation de la présente invention, le système comprend en outre des moyens pour maintenir une position relative prédéfinie entre chaque récepteur et le dispositif d'émission d'énergie, cette position étant choisie pour obtenir un couplage optimal entre le circuit résonant du récepteur et un module résonant du dispositif d'émission d'énergie.

Selon un mode de réalisation de la présente invention, les moyens de positionnement comprennent une paroi en forme de cylindre creux.

Selon un mode de réalisation de la présente invention, la paroi supporte des enroulements conducteurs formant les inductances des modules résonants.

Selon un mode de réalisation de la présente invention, le dispositif d'émission d'énergie comprend en outre des moyens pour mesurer le courant ou la tension de sortie du générateur ; en déduire le nombre de récepteurs couplés au dispositif ; et ajuster en conséquence les caractéristiques de sortie du générateur, de façon à maintenir un transfert d'énergie constant vers les récepteurs, indépendamment du nombre de récepteurs.

Un autre mode de réalisation de la présente invention prévoit l'utilisation du dispositif d'émission d'énergie susmentionné, pour alimenter simultanément en énergie électrique au moins deux appareils récepteurs comprenant chacun un circuit résonant comportant au moins un condensateur et au moins une inductance.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est un schéma électrique d'un mode de réalisation d'un système comprenant :

- un dispositif d'émission d'énergie adapté à alimenter simultanément en énergie électrique une pluralité de récepteurs ; et
- des récepteurs correspondants ;

la figure 2 est une représentation simplifiée d'un mode de réalisation d'un dispositif d'émission d'énergie adapté à alimenter simultanément en énergie électrique une pluralité de récepteurs ;

les figures 3A à 3E sont des schémas électriques représentant des variantes de réalisation d'un module résonant du dispositif d'émission d'énergie de la figure 2 ;

la figure 4 illustre de façon schématique un mode de réalisation d'un système de recharge électrique d'objets décoratifs lumineux ;

la figure 5 est une représentation schématique plus détaillée d'un système de recharge d'objets décoratifs lumineux du type décrit en relation avec la figure 4 ; et

la figure 6 est une représentation schématique d'un autre mode de réalisation d'un système de recharge électrique d'objets décoratifs lumineux.


Description détaillée

Par souci de clarté, de mêmes éléments ont été désignés par de mêmes références aux différentes figures et, de plus, les diverses figures ne sont pas tracées à l'échelle. En outre, pour des raisons de clarté, seuls les éléments utiles à la compréhension de l'invention ont été représentés et seront décrits.

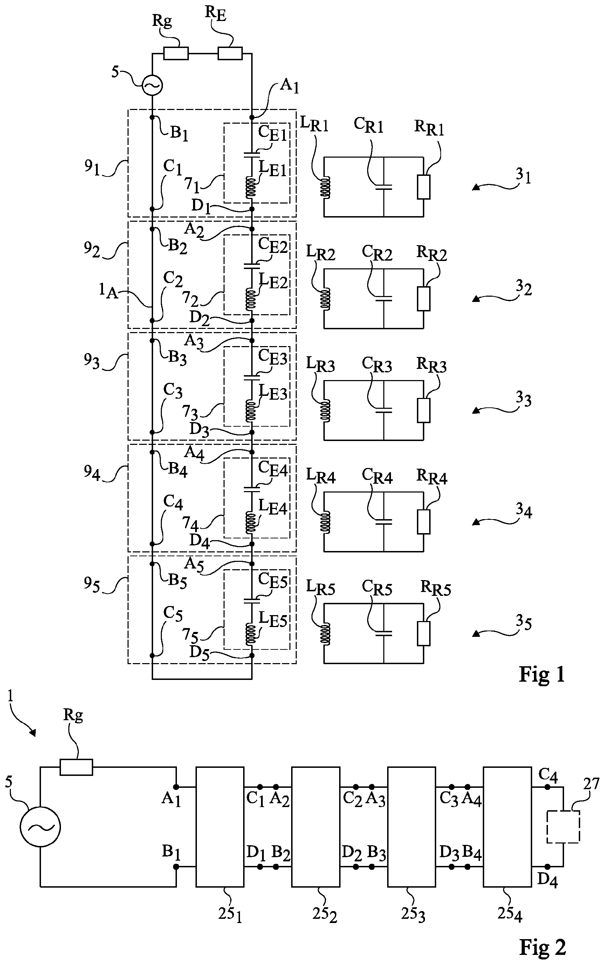

La figure 1 est un schéma électrique représentant un exemple de réalisation d'un système comprenant :

- un dispositif $1_A$ d'émission d'énergie adapté à alimenter simultanément en énergie électrique une pluralité de récepteurs ; et
- des récepteurs correspondants (cinq récepteurs $3_1$ à $3_5$ dans cet exemple).

Le dispositif $1_A$ d'émission d'énergie comprend un unique générateur 5 de signal alternatif, par exemple un générateur radiofréquence (RF), et, aux bornes du générateur 5, une succession de circuits d'antenne $7_1$ à $7_5$ reliés en série. Chaque circuit d'antenne $7_i$ (avec i compris entre 1 et 5 dans cet exemple) comprend un condensateur $C_{Ei}$, en série avec une inductance $L_{Ei}$ représentant l'inductance d'un enroulement conducteur formant une antenne. Sur le schéma de la figure 1, une résistance $R_E$ a été représentée, connectée entre le générateur 5 et la succession de circuits d'antenne $7_1$ à $7_5$. La résistance $R_E$ correspond à la somme des résistances propres $R_{Ei}$ des antennes $L_{Ei}$ et d'une éventuelle résistance d'adaptation d'impédance. Une résistance $R_g$, reliée en série avec la résistance $R_E$, correspond à la résistance interne, ou impédance de sortie, du générateur 5. En d'autres termes, le dispositif $1_A$ comprend, aux bornes du générateur 5, une succession de modules résonants $9_i$, i étant compris entre 1 et 5 dans cet exemple, comprenant chacun au moins un condensateur et au moins un enroulement conducteur ou inductance formant une antenne. Des première et deuxième bornes $A_1$ et $B_1$ du module $9_1$ sont reliées aux bornes du générateur 5. Dans cet exemple, la borne $B_1$ est connectée, ou directement reliée, à une première borne du générateur, et la borne $A_1$ est reliée à une deuxième borne du générateur par l'intermédiaire des résistances $R_g$ et $R_E$. Des première et deuxième bornes des autres modules (respectivement $A_2$ et $B_2$ ; $A_3$ et $B_3$ ; $A_4$ et $B_4$ ; et $A_5$ et $B_5$) sont connectées à des troisième et quatrième bornes du module de rang précédent (respectivement $C_1$ et $D_1$ ; $C_2$ et $D_2$ ; $C_3$ et $D_3$ ; et $C_4$ et $D_4$). Des troisième et quatrième bornes $C_5$ et $D_5$ du dernier module résonant, à savoir le module $9_5$ dans cet exemple, sont reliées entre elles par un court-circuit.

Dans l'exemple représenté, chacun des récepteurs $3_i$ est modélisé par un circuit résonant parallèle $R_{Ri}L_{Ri}C_{Ri}$. La résistance $R_{Ri}$ correspond à la charge représentée par l'appareil récepteur sur le circuit d'antenne du récepteur (cette charge peut comporter des circuits électroniques passifs et/ou actifs, une batterie, etc.), l'inductance $L_{Ri}$ correspond à l'inductance d'un enroulement conducteur formant l'antenne du récepteur, et le condensateur $C_{Ri}$ correspond à une capacité d'accord de la fréquence de résonance du récepteur.

En fonctionnement, c'est-à-dire pendant une phase de télé-alimentation des récepteurs $3_1$ à $3_5$, les récepteurs $3_1$ à $3_5$ sont positionnés respectivement au voisinage des circuits d'antenne $7_1$ à $7_5$ du dispositif 1A d'émission d'énergie, de façon que les antennes réceptrices $L_{R1}$ à $L_{R5}$ soient respectivement dans le champ des antennes émettrices $L_{E1}$ à $L_{E5}$. Dans un mode de réalisation préféré, des moyens mécaniques (par exemple un socle d'accueil multi-emplacement) sont prévus pour maintenir les appareils récepteurs dans une position telle que les antennes réceptrices soient à une distance nominale des antennes émettrices, permettant un transfert d'énergie optimal entre l'émetteur et les récepteurs. La distance nominale entre les antennes émettrices et les antennes réceptrices est par exemple comprise entre 1 et 10 centimètres. Plus généralement, la distance nominale entre les antennes émettrices et les antennes réceptrices est par exemple comprise entre 0 et 0.5 fois le diamètre équivalent moyen des circuits d'antennes émettrices et réceptrices. Le diamètre équivalent D d'un circuit d'antenne est défini en fonction de la surface S délimitée par le contour extérieur de l'antenne, selon l'équation suivante : $S = D^2 * \pi/4$.

Dans un tel système, dans chaque circuit d'antenne $7_i$ du dispositif d'émission d'énergie, le condensateur $C_{Ei}$ et l'inductance $L_{Ei}$ forment un ensemble LC auto-résonant. Un avantage est que chaque ensemble LC auto-résonant peut être dimensionné pour être accordé (par exemple en fréquence) de façon privilégiée avec l'un des récepteurs $3_i$, ce qui permet un transfert d'énergie optimisé de l'émetteur vers les récepteurs.

Le dispositif 1 présente en outre l'avantage d'être simple à réaliser puisqu'il ne comprend qu'un seul générateur de signal alternatif, et ne comprend pas d'électronique de commutation ou d'activation/désactivation des circuits d'antenne.

Comme cela sera expliqué plus en détail ci-après, le dimensionnement du circuit d'émission d'énergie est réalisé en tenant compte du nombre de récepteurs susceptibles d'être télé-alimentés simultanément, et des caractéristiques des récepteurs.

La figure 2 est une représentation simplifiée d'un mode de réalisation d'un dispositif 1 d'émission d'énergie par couplage électromagnétique adapté à alimenter simultanément en énergie électrique une pluralité de récepteurs (quatre dans cet exemple).

Le dispositif 1 comprend un unique générateur 5 fournissant un signal électrique alternatif, et, aux bornes du générateur 5, une succession de quatre modules résonants $25_i$, i étant compris entre 1 et 4 dans cet exemple, comprenant chacun au moins un condensateur et au moins un enroulement conducteur ou inductance formant une antenne. Sur la figure 2, les modules résonants sont représentés par des blocs, et, en particulier, les condensateurs et les circuits d'antennes ne sont pas visibles. Des première et deuxième bornes $A_1$ et $B_1$ du module $25_1$ sont reliées aux bornes du générateur 5, et des première et deuxième bornes des autres modules (respectivement $A_2$ et $B_2$ ; $A_3$ et $B_3$ ; et $A_4$ et $B_4$) sont connectées à des troisième et quatrième bornes du module de rang précédent (respectivement $C_1$ et $D_1$ ; $C_2$ et $D_2$ ; et $C_3$ et $D_3$).

Des troisième et quatrième bornes $C_4$ et $D_4$ du dernier module résonant, à savoir le module $25_4$ dans cet exemple, sont connectées à un bloc de terminaison 27. Comme cela sera expliqué plus en détail ci-après, le bloc 27 correspond soit à un court-circuit soit à un circuit ouvert, selon le type de module résonant utilisé.

Une résistance $R_g$, correspondant à la résistance interne du générateur 5, relie le générateur 5 à la borne A1. On notera que la résistance $R_E$ représentée à la figure 1 n'a pas été représentée sur la figure 2. En pratique, cette résistance est répartie dans les modules $25_i$ en des résistances $R_{Ei}$ (non représentées), chaque résistance $R_{Ei}$ correspondant à la résistance propre de l'antenne $L_{Ei}$ du module $25_i$. Une éventuelle résistance d'adaptation d'impédance peut en outre être prévue en série avec la résistance $R_g$, entre le générateur 5 et la borne A1, ou répartie dans les modules $25_i$.

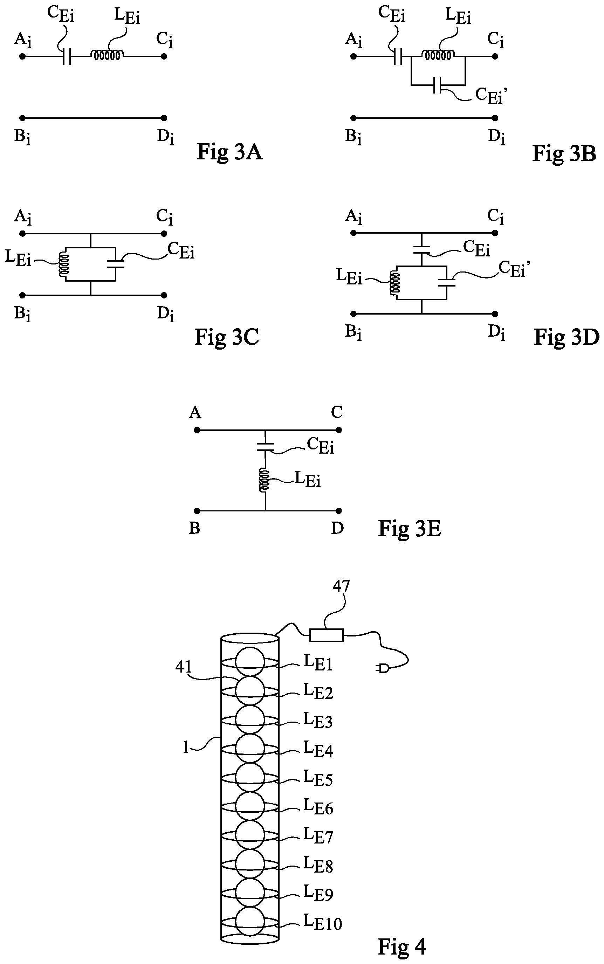

Les figures 3A à 3E sont des schémas électriques représentant des exemples de réalisation des modules résonants du dispositif d'émission d'énergie de la figure 2.

La figure 3A illustre un mode de réalisation dans lequel le module résonant comprend, en série entre les première et troisième bornes $A_i$ et $C_i$, un condensateur $C_{Ei}$ et un enroulement conducteur ou inductance $L_{Ei}$ formant une antenne. Les deuxième et quatrième bornes $B_i$ et $D_i$ du module sont connectées entre elles. Ce mode de réalisation correspond au dispositif 1A d'émission d'énergie de la figure 1. Dans ce cas, les troisième et quatrième bornes $C_i$ et $D_i$ du dernier module de la succession sont connectées entre elles, c'est-à-dire que le bloc de terminaison 27 de la figure 2 est un court-circuit.

La figure 3B illustre un autre mode de réalisation dans lequel le module résonant comprend les mêmes éléments que dans le mode de réalisation de la figure 3A, et comprend en outre un second condensateur $C_{Ei}'$, connecté en parallèle de l'inductance $L_{Ei}$, offrant un degré de réglage supplémentaire. Comme dans le mode de réalisation de la figure 3A, les troisième et quatrième bornes $C_i$ et $D_i$ du dernier module de la succession sont connectées entre elles, c'est-à-dire que le bloc de terminaison 27 de la figure 2 est un court-circuit.

La figure 3C illustre un autre mode de réalisation dans lequel le module résonant comprend, en parallèle entre les première et deuxième bornes $A_i$ et $B_i$, un enroulement conducteur ou inductance $L_{Ei}$ formant une antenne, et un condensateur $C_{Ei}$. Les première et troisième bornes $A_i$ et $C_i$ sont connectées entre elles, et les deuxième et quatrième bornes $B_i$ et $D_i$ sont connectées entre elles. Dans ce cas, les troisième et quatrième bornes $C_i$ et $D_i$ du dernier module de la succession ne sont pas connectées, c'est-à-dire que le bloc de terminaison 27 de la figure 2 est un circuit ouvert.

La figure 3D illustre un autre mode de réalisation dans lequel le module résonant comprend les mêmes éléments que dans le mode de réalisation de la figure 3C, et comprend en outre, en série avec l'association parallèle $L_{Ei}C_{Ei}$, un second condensateur $C_{Ei}'$, connecté entre la borne $A_i$ et le noeud commun à l'inductance $L_{Ei}$ et au condensateur $C_{Ei}$, offrant un degré de réglage supplémentaire. Comme dans le mode de réalisation de la figure 3C, les troisième et quatrième bornes $C_i$ et $D_i$ du dernier module de la succession ne sont pas connectées, c'est-à-dire que le bloc de terminaison 27 de la figure 2 est un circuit ouvert.

La figure 3E illustre un autre mode de réalisation dans lequel le module résonant comprend, en série entre les première et deuxième bornes $A_i$ et $B_i$, un condensateur $C_{Ei}$ et un enroulement conducteur ou inductance $L_{Ei}$ formant une antenne. Les première et troisième bornes $A_i$ et $C_i$ du module sont connectées entre elles, et les deuxième et quatrième bornes $B_i$ et $D_i$ sont connectées entre elles. Dans ce cas, les troisième et quatrième bornes $C_i$ et $D_i$ du dernier module de la succession ne sont pas connectées, c'est-à-dire que le bloc de terminaison 27 de la figure 2 est un circuit ouvert.

L'homme du métier saura prévoir d'autres agencements des éléments du module résonant que ceux décrits en relation avec les figures 3A à 3E. Plus généralement, le dispositif d'émission d'énergie par couplage électromagnétique proposé comporte : un unique générateur fournissant un signal électrique alternatif entre deux bornes ; et une succession de modules résonants comprenant chacun au moins un condensateur et au moins une inductance, des première et deuxième bornes d'un premier module étant reliées aux bornes du générateur, et des première et deuxième bornes du ou des autres modules étant connectées à des troisième et quatrième bornes du module de rang précédent. Dans un exemple de réalisation, des modules consécutifs peuvent être reliés entre eux par une liaison bifilaire. On obtient ainsi un système modulaire facile à déployer et à adapter aux besoins de l'utilisateur.

Dans un dispositif d'émission d'énergie du type décrit ci-dessus, la quantité d'énergie transférée et le rendement du transfert d'énergie dépendent du nombre de récepteurs présents. En effet, chaque récepteur, lorsqu'il est positionné en regard d'un module résonant de l'émetteur, ramène une certaine impédance sur le circuit d'antenne de ce module résonant. Lorsqu'un ou plusieurs récepteurs sont absents, l'impédance globale de l'émetteur s'en trouve modifiée, ce qui influe sur le transfert d'énergie vers les récepteurs restants. Le dimensionnement des circuits d'antenne des modules résonants du dispositif d'émission est par exemple choisi de façon à obtenir un transfert d'énergie optimal lorsque tous les récepteurs sont présents.

A titre d'exemple, pour des ensembles LC auto-résonants reliés en série du type décrit en relation avec la figure 3A, le transfert d'énergie est optimal lorsque :

$$\sum_{i=1}^{n} \frac{M_i^2 \omega}{L_{Ri}} \times Q_i = R_g + \sum_{i=1}^{n} R_{Ei},$$

où n est le nombre de modules résonants, $\omega$ est la pulsation du champ électromagnétique émis, $M_i$ est la mutuelle inductance entre un module résonant de rang i et le récepteur de même rang, et $Q_i$ est le facteur de qualité du récepteur de rang i, avec : $M_i = k_i \sqrt{L_{Ei} L_{Ri}}$ , $k_i$ étant le coefficient de couplage entre les deux antennes de rang i ; et

$$Q_i = \frac{R_{Ri}}{L_{Ri} \omega}.$$

Pour des ensembles LC auto-résonants reliés en parallèle du type décrit en relation avec la figure 3C, le transfert d'énergie est optimal lorsque :

$$\sum_{i=1}^{n} \frac{M_i^2 \omega}{L_{Ri} \times (L_{Ei}\omega)^2} \times Q_i = \frac{1}{R_g} + \sum_{i=1}^{n} \frac{1}{R_{Ei}}$$

On notera que les formules susmentionnées correspondent à une approximation valable lorsque $Q_i \gg 1$ (dans le cas d'une association en série des ensembles auto-résonants), par exemple $Q_i > 10$, et $k_i^2 Q_i \ll 1$ (dans le cas d'une association en parallèle des ensembles auto-résonants), par exemple $k_i^2 Q_i < 0.1$. En outre, ces formules ne tiennent pas compte d'éventuelles résistances d'adaptation d'impédance.

Lorsque les ensembles LC auto-résonants sont reliés en série, ce qui correspond aux exemples décrits en relation avec les figures 1, 3A et 3B, le retrait d'un ou plusieurs récepteurs entraine une diminution de la somme des impédances ramenées par les récepteurs sur le dispositif d'émission. Il en résulte une augmentation du courant circulant dans le dispositif d'émission, et donc une augmentation de la quantité d'énergie transmise aux récepteurs restants. Par exemple, dans le cas d'un système de recharge de batteries par couplage électromagnétique, les appareils récepteurs restants seront rechargés plus rapidement.

Lorsque les ensembles LC auto-résonants sont reliés en parallèle, ce qui correspond aux exemples décrits en relation avec les figures 3C, 3D et 3E, le retrait d'un ou plusieurs récepteurs entraine une diminution du courant circulant dans le dispositif d'émission. Il en résulte une diminution de la quantité d'énergie transmise aux récepteurs restants, mais une augmentation du rendement du transfert d'énergie.

Dans une variante de réalisation, on peut prévoir des moyens de contrôle pour : mesurer le courant circulant dans l'émetteur et en déduire le nombre de récepteurs présents ; et ajuster en conséquence les caractéristiques de sortie du générateur, de façon à maintenir un transfert d'énergie constant vers les récepteurs, indépendamment du nombre de récepteurs présents. En tout état de cause, même en l'absence de certains récepteurs, tous les circuits d'antenne des modules résonants du dispositif d'émission restent actifs et émettent un champ électromagnétique.

La figure 4 illustre de façon schématique un mode de réalisation d'un système de recharge électrique d'objets décoratifs lumineux, comprenant un dispositif d'émission d'énergie du type décrit en relation avec la figure 2.

Dans cet exemple, les appareils récepteurs sont des boules lumineuses 41, par exemple des boules en un matériau translucide à l'intérieur desquelles sont disposées des diodes électroluminescentes (non représentées) reliées à une batterie (non représentée). A l'intérieur de chaque boule 41, il est prévu un circuit d'antenne du type décrit en relation avec la figure 1 (non représenté sur la figure 4), pour recharger la batterie par couplage électromagnétique lorsque la boule 41 est positionnée à proximité d'un dispositif 1 d'émission d'énergie adapté.

Dans l'exemple représenté, le dispositif 1 d'émission d'énergie, ou chargeur, a la forme générale d'un cylindre creux ou tuyau adapté à contenir des boules lumineuses 41 (dix boules dans cet exemple). Un enroulement conducteur circulaire $L_{Ei}$ (i étant compris entre 1 et 10 dans cet exemple) à une ou plusieurs boucles est formé autour de la paroi interne ou externe du tuyau, ou noyé dans la paroi du tuyau, au niveau de chaque emplacement susceptible de recevoir une boule lumineuse 41. Les enroulements conducteurs $L_{Ei}$ forment des antennes d'émission d'énergie. Les antennes $L_{Ei}$ sont reliées entre elles et à des condensateurs d'accord en fréquence selon un schéma électrique du type décrit en relation avec les figures 3A à 3E. Sur la figure 4, les condensateurs d'accord en fréquence et les liaisons entre les enroulements $L_{Ei}$ n'ont pas été représentés. Dans cet exemple, le dispositif 1 d'émission d'énergie comprend en outre un boitier d'alimentation 47 destiné à être branché à un réseau de distribution d'énergie tel que le secteur. Le boîtier 47 peut comprendre divers éléments, par exemple un convertisseur de tension, un générateur RF, une résistance d'adaptation d'impédance, etc.

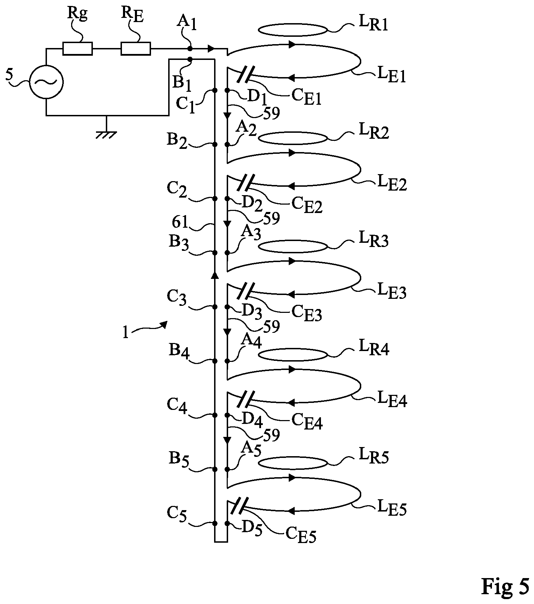

La figure 5 est une représentation schématique d'un système de recharge d'objets décoratifs lumineux du type décrit en relation avec la figure 4.

Dans cet exemple, le dispositif 1 d'émission d'énergie comprend cinq modules résonants et est adapté à recharger simultanément cinq boules lumineuses. Par souci de clarté, le cylindre ou tuyau adapté à contenir les boules lumineuses pendant leur recharge n'a pas été représenté sur la figure 5. Chaque module résonant comprend un enroulement conducteur circulaire $L_{Ei}$ (i étant compris entre 1 et 5 dans cet exemple) formant une antenne, en série avec un condensateur $C_{Ei}$. Les ensembles LC auto-résonants sont reliés en série selon un agencement du type décrit en relation avec la figure 1. La succession de modules résonants est connectée aux bornes d'un générateur de signal alternatif 5. Une résistance $R_E$ (correspondant à la réunion des résistances propres des antennes $L_{Ei}$ et d'une éventuelle résistance d'adaptation d'impédance) est prévue entre le générateur et la succession de modules résonants. Une résistance $R_g$, reliée en série avec la résistance $R_E$, correspond à la résistance interne du générateur 5.

Sur la figure 5, un enroulement conducteur circulaire $L_{Ri}$ a été représenté en regard de chacune des antennes émettrices $L_{Ei}$. Les enroulements $L_{Ri}$ correspondent aux antennes réceptrices des boules lumineuses. Par souci de simplification, les autres éléments des boules lumineuses n'ont pas été représentés sur la figure 5. A titre d'exemple, côté émetteur, les antennes circulaires $L_{Ei}$ sont des enroulements à un tour, et côté récepteur, les antennes circulaires $L_{Ri}$ sont des enroulements à deux tours.

Les antennes circulaires d'émission $L_{Ei}$ et de réception $L_{Ri}$ ne sont pas nécessairement dans un même plan. Toutefois, pour un transfert d'énergie optimal (en termes de quantité d'énergie transmise ou de rendement), il est préférable que les antennes réceptrices $L_{Ri}$ soient disposées dans un plan parallèle aux plans contenant les antennes émettrices $L_{Ei}$ correspondantes. On pourra prévoir des moyens de positionnement pour maintenir les antennes réceptrices dans une position prédéfinie par rapport aux antennes émettrices, de façon à garantir un transfert d'énergie optimal. La position relative des antennes émettrices par rapport aux antennes réceptrices est par exemple la même pour tous les couples émetteur/récepteur. A titre d'exemple, les moyens de positionnement peuvent comprendre des détrompeurs mécaniques, par exemple un méplat dans les parties inférieures et supérieures des boules 41 (figure 4), pour s'assurer de la bonne orientation des antennes réceptrices par rapport aux antennes émettrices. Dans l'exemple des figures 4 et 5, les moyens de positionnement comportent aussi le tuyau ou cylindre creux dans lequel sont placées les boules lumineuses.

Dans un mode de réalisation préféré, le système est dimensionné de sorte que la somme des impédances des récepteurs ramenées sur l'émetteur corresponde à l'impédance de sortie du circuit émetteur. L'impédance de sortie du générateur 5 est par exemple de 50 ohms.

Pour minimiser les capacités parasites, il est préférable de minimiser la longueur des fils conducteurs 59 reliant les modules résonants entre eux, et du fil conducteur 61 reliant le dernier module résonant au générateur.

Pour minimiser les inductances parasites, il est préférable de réduire la distance entre les fils conducteurs 59 et le fil conducteur 61.

Dans un exemple de réalisation, on prévoit d'accoler les fils 59 et le fil 61, de façon à minimiser les inductances parasites. En outre, ces fils ne sont pas torsadés, ce qui augmenterait leur longueur et donc les capacités parasites.

D'autres modes de réalisation pourront être prévus. On peut par exemple torsader les fils 59 et 61 pour minimiser la distance les séparant et réduire ainsi les inductances parasites, ou utiliser un câble coaxial.

On notera que dans les exemples représentés aux figures 4 et 5, le système de recharge comprend un module résonant par boule lumineuse à recharger. Les modes de réalisation décrits ne se limitent toutefois pas à ce cas particulier. A titre d'exemple, le dispositif d'émission peut comporter un nombre de modules résonants égal au nombre maximal de boules lumineuses susceptibles d'être chargées simultanément, plus un. Dans ce cas, chaque boule est couplée de façon privilégiée avec un premier module résonant, et est également couplée, avec un coefficient de couplage moindre, avec au moins un deuxième module résonant. Ceci permet d'augmenter l'efficacité du transfert d'énergie vers les boules lumineuses.

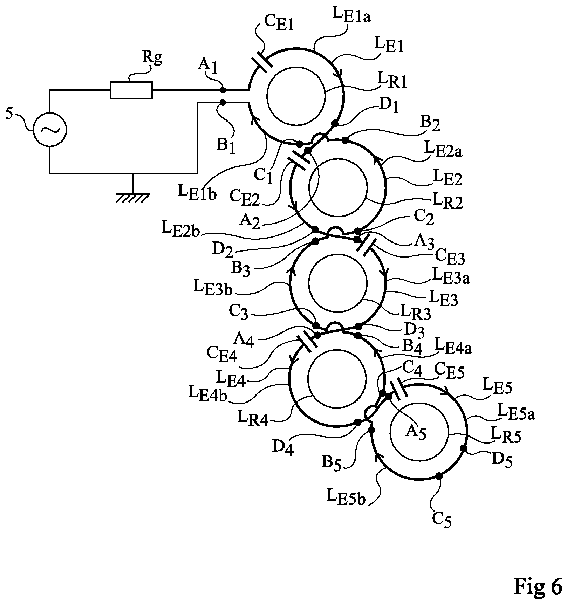

La figure 6 illustre de façon schématique un autre mode de réalisation d'un système de recharge électrique d'objets décoratifs lumineux, comprenant un dispositif d'émission d'énergie du type décrit en relation avec la figure 2.

Les appareils récepteurs sont par exemple des boules lumineuses du type décrit en relation avec les figures 4 et 5.

Dans l'exemple représenté, le dispositif 1 d'émission d'énergie comprend cinq modules résonants et est adapté à recharger simultanément cinq boules lumineuses. Dans cet exemple, le dispositif d'émission d'énergie, ou chargeur, a la forme d'un plateau apte à recevoir des boules lumineuses.

Chaque module résonant comprend un enroulement ou bobinage $L_{Ei}$ (i allant de 1 à 5 dans cet exemple) sensiblement plan, formé sur une paroi du plateau ou noyé dans le plateau, et ouvert en deux points. A titre d'exemple, chaque enroulement $L_{Ei}$ est un enroulement à un tour ouvert en deux points diamétralement opposés. En d'autres termes, chaque module résonant comprend deux portions d'enroulement $L_{Eia}$ et $L_{Eib}$ formant l'antenne émettrice $L_{Ei}$ du module.

Dans le mode de réalisation de la figure 6, les modules résonants sont juxtaposés deux à deux et connectés de façon que le courant circulant dans le dispositif d'émission d'énergie passe, dans le sens aller, par les condensateurs $C_{Ei}$ et par les portions d'enroulement $L_{Eia}$ des modules successifs (du premier au cinquième module), et, dans le sens retour, par les portions d'enroulement $L_{Eib}$ des modules résonants successifs (du cinquième au premier module).

Dans l'exemple représenté, chaque module résonant comprend quatre bornes $A_i$, $B_i$, $C_i$ et $D_i$, et comprend, entre la borne $A_i$ et la borne $D_i$, un condensateur $C_{Ei}$ en série avec une première portion $L_{Eia}$ de l'enroulement $L_{Ei}$, et entre la borne $C_i$ et la borne $B_i$, une deuxième portion $L_{Eib}$ de l'enroulement $L_{Ei}$. En d'autres termes, l'enroulement $L_{Ei}$ est interrompu en un premier point par le condensateur $C_{Ei}$ et l'ouverture entre les bornes $A_i$ et $B_i$, et en un deuxième point par l'ouverture entre les bornes $C_i$ et $D_i$.

Les portions d'enroulement $L_{Eia}$ et $L_{Eib}$ des modules successifs sont disposées de façon que le sens de circulation du courant dans l'enroulement $L_{Ei}$ s'inverse à chaque changement de module par rapport au sens de circulation du courant dans l'enroulement $L_{Ei}$ de rang précédent. A titre d'exemple, le courant circule dans le sens des aiguilles d'une montre dans l'enroulement $L_{E1}$, dans le sens inverse dans l'enroulement $L_{E2}$, et ainsi de suite. Le sens du champ créé par les enroulements s'inverse donc à chaque changement de module résonant (ce champ est toujours perpendiculaire au plateau mais est tantôt entrant tantôt sortant selon le sens de rotation du courant).

Un avantage du mode de réalisation de la figure 6 est que la configuration en plateau permet de disposer les ensembles résonants LC très proches les uns des autres, voire de les accoler. Ceci résulte notamment du fait que les interactions ou couplages parasites entre les différents modules résonants sont nettement plus faibles que dans une configuration en cylindre du type décrit en relation avec les figures 4 et 5. Ceci permet de s'affranchir de tout ou partie des liaisons inter-module, et des inductances parasites liées à ces liaisons.

Un autre avantage est lié à la signature électromagnétique à distance du dispositif d'émission d'énergie. En effet, le champ total vu à l'extérieur du dispositif est la somme des contributions positives et négatives générées au niveau de chaque module résonant. Ce champ est plus faible que dans une structure du type décrit en relation avec les figures 4 et 5, dans laquelle les contributions générées par les différents modules résonants sont toutes de même sens. Ceci permet de minimiser l'émission de perturbations parasites dans l'environnement.

Sur la figure 6, un enroulement conducteur circulaire $L_{Ri}$ a été représenté en regard de chacune des antennes émettrices $L_{Ei}$. Les enroulements $L_{Ri}$ correspondent aux antennes réceptrices des boules lumineuses. Par souci de simplification, les autres éléments des boules lumineuses n'ont pas été représentés. A titre d'exemple, côté récepteur, les antennes circulaires $L_{Ri}$ sont des enroulements à deux tours. Les antennes circulaires d'émission $L_{Ei}$ et de réception $L_{Ri}$ ne sont pas nécessairement dans un même plan. Toutefois, pour un transfert d'énergie optimal (en termes de quantité d'énergie transmise ou de rendement), il est préférable que les antennes réceptrices $L_{Ri}$ soient disposées dans un plan parallèle aux plans contenant les antennes émettrices $L_{Ei}$ correspondantes. On pourra prévoir des moyens de positionnement pour maintenir les antennes réceptrices dans une position prédéfinie par rapport aux antennes émettrices, de façon à garantir un transfert d'énergie optimal. A titre d'exemple, les moyens de positionnement peuvent comprendre des détrompeurs mécaniques, par exemple un méplat dans les parties inférieures des boules.

D'autres applications pourront bien entendu être prévues. Par exemple, on peut prévoir de déployer un dispositif d'émission d'énergie sur des infrastructures de type ponts, routes, immeubles, etc., pour alimenter des capteurs noyés dans des matériaux tels que le béton ou le métal, et dont l'alimentation en énergie électrique peut difficilement être réalisée par une liaison filaire.

Un autre exemple d'application concerne un dispositif de surveillance d'un patient sur un lit d'hôpital. Des appareils de mesure de type sonde ou capteur peuvent être placés sur le patient, et télé-alimentés à l'aide d'un dispositif d'émission d'énergie équipant le lit du patient. Ceci évite des liaisons filaires entre le patient et son environnement (ou entre le lit du patient et son environnement si le dispositif d'émission d'énergie est externe au lit).

Des modes de réalisation particuliers de la présente invention ont été décrits. Diverses variantes et modifications apparaîtront à l'homme de l'art.

En particulier, l'homme de l'art saura adapter les exemples de réalisation décrits ci-dessus en fonction du nombre d'appareils récepteurs susceptibles d'être télé-alimentés simultanément.

De plus, l'invention ne se restreint pas aux exemples particuliers décrits ci-dessus, dans lequel chaque appareil récepteur est associé à un module résonant comprenant un enroulement conducteur formant une antenne, et réciproquement. On pourra prévoir des modes de réalisation dans lesquels les nombres de modules résonants et d'appareils récepteurs susceptibles d'être télé-alimentés simultanément ne sont pas identiques. On pourra par exemple prévoir un système dans lequel un module résonant du dispositif d'émission d'énergie permet de télé-alimenter une pluralité d'appareils récepteurs, ou, à l'inverse, un système dans lequel l'énergie reçue par un appareil récepteur provient d'une pluralité de modules résonants.

Par ailleurs, dans les exemples de réalisation de dispositifs d'émission d'énergie décrits ci-dessus, on a mentionné la possibilité de prévoir une résistance d'adaptation d'impédance entre le générateur de signal alternatif et la succession de modules résonants. Cette résistance est facultative. En outre, s'il existe un besoin d'adaptation d'impédance, l'homme de l'art saura prévoir d'autres moyens d'adaptation d'impédance, par exemple un transformateur d'impédance, entre le générateur et la succession de modules résonants. En variante, on pourra prévoir d'ajouter, entre le générateur et la succession de modules résonants, une longueur de câble spécifiquement choisie à des fins d'adaptation d'impédance. La résistance d'adaptation d'impédance peut en outre être répartie entre les différents modules auto-résonants.

**Revendications**

1.  Système d'alimentation en énergie par couplage électromagnétique, comportant :

    un dispositif (1) d'émission d'énergie par couplage électromagnétique, comportant : un unique générateur (5) fournissant un signal électrique alternatif entre deux bornes ; et une succession de modules ($25_i$) résonants comprenant chacun un premier condensateur ($C_{Ei}$) et une première inductance ($L_{Ei}$), et des première ($A_i$), deuxième ($B_i$), troisième ($C_i$) et quatrième ($D_i$) bornes, les première ($A_i$) et deuxième ($B_i$) bornes d'un premier module étant reliées aux bornes du générateur, et les première ($A_i$) et deuxième ($B_i$) bornes du ou des autres modules étant connectées aux troisième ($C_i$) et quatrième ($D_i$) bornes du module de rang précédent ; et
    au moins deux récepteurs ($3_i$) comprenant chacun un circuit résonant comportant au moins un condensateur ($C_{Ri}$) et au moins une inductance ($L_{Ri}$).

2.  Système selon la revendication 1, dans lequel, dans le dispositif (1) d'émission, deux modules ($25_i$) résonants consécutifs sont reliés entre eux par une liaison (59, 61) bifilaire.

3.  Système selon la revendication 2, dans lequel, dans le dispositif (1) d'émission, ladite liaison bifilaire (59, 61) comprend une paire de fils accolés.

4.  Système selon la revendication 2, dans lequel, dans le dispositif (1) d'émission, ladite liaison (59, 61) comprend une paire de fils torsadée.

5.  Système selon l'une quelconque des revendications 1 à 4, dans lequel, dans le dispositif (1) d'émission, dans chaque module, le premier condensateur ($C_{Ei}$) et la première inductance ($L_{Ei}$) sont reliés en série entre les première ($A_i$) et troisième ($C_i$) bornes, les deuxième ($B_i$) et quatrième ($D_i$) bornes étant reliées entre elles.

6.  Système selon l'une quelconque des revendications 1 à 4, dans lequel, dans le dispositif (1) d'émission, dans chaque module, le premier condensateur ($C_{Ei}$) et la première inductance ($L_{Ei}$) sont reliés en parallèle entre les première

(A$_i$) et deuxième (B$_i$) bornes, les première (A$_i$) et troisième (C$_i$) bornes étant reliées entre elles, et les deuxième (B$_i$) et quatrième bornes (D$_i$) étant reliées entre elles.

7. Système selon l'une quelconque des revendications 1 à 4, dans lequel, dans le dispositif (1) d'émission, les modules successifs sont connectés de façon que, dans chaque module, le sens de circulation du courant dans l'inductance (L$_{Ei}$) soit différent du sens de circulation du courant dans l'inductance (L$_{Ei-1}$) du module de rang précédent.

8. Système selon l'une quelconque des revendications 1 à 7, dans lequel, dans chaque récepteur (3$_i$), le circuit résonant est adapté à fournir de l'énergie électrique à une charge (R$_{Ri}$), en présence d'un champ électromagnétique émis par le dispositif d'émission.

9. Système selon l'une quelconque des revendications 1 à 8, comprenant en outre des moyens pour maintenir une position relative entre chaque récepteur (3$_i$) et le dispositif (1) d'émission d'énergie, cette position étant choisie en fonction du couplage souhaité entre le circuit résonant du récepteur (3$_i$) et un module résonant du dispositif d'émission d'énergie.

10. Système selon la revendication 9, dans lequel lesdits moyens comprennent une paroi en forme de cylindre creux.

11. Système selon la revendication 10, dans lequel ladite paroi porte des enroulements conducteurs formant les inductances (L$_{Ei}$) des modules résonants.

12. Système selon l'une quelconque des revendications 1 à 11, adapté à la recharge, par couplage électromagnétique, d'objets décoratifs lumineux.

13. Système selon l'une quelconque des revendications 1 à 12, dans lequel ledit dispositif (1) d'émission d'énergie comprend en outre des moyens pour :

mesurer le courant ou la tension de sortie dudit générateur (5) ;
en déduire le nombre de récepteurs (3$_i$) couplés audit dispositif (1) ; et
ajuster en conséquence les caractéristiques de sortie dudit générateur (5), de façon à maintenir un transfert d'énergie constant vers les récepteurs, indépendamment du nombre de récepteurs.

14. Utilisation d'un système selon l'une quelconque des revendications 1 à 13, pour alimenter simultanément en énergie électrique au moins deux charges (R$_{Ri}$).


**Patentansprüche**

1. Ein Verfahren zur Energieversorgung durch elektromagnetische Kopplung, das Folgendes aufweist:

eine Vorrichtung (1) zur Energieübertragung durch elektromagnetische Kopplung, die Folgendes aufweist: einen einzelnen Generator (5), der ein A.C. elektrisches Signal zwischen zwei Anschlüssen liefert; und eine Folge resonanter Module (25$_i$), die jeder einen ersten Kondensator (C$_{Ei}$) und eine erste Induktivität (L$_{Ei}$) und erste (A$_i$), zweite (B$_i$), dritte (C$_i$) und vierte (D$_i$) Anschlüsse aufweisen, wobei die ersten (A$_i$) und zweiten (B$_i$) Anschlüsse eines ersten Moduls über den Generator verbunden sind und die ersten (A$_i$) und zweiten (B$_i$) Anschlüsse des anderen Moduls bzw. der anderen Module mit den dritten (C$_i$) und vierten (D$_i$) Anschlüssen des vorhergehenden Moduls verbunden sind; und
wenigstens zwei Empfänger (3$_i$), die jeweils einen Resonanzkreis mit wenigstens einem Kondensator (C$_{Ri}$) und wenigstens einer Induktivität (L$_{Ri}$) aufweisen.

2. Verfahren gemäß Anspruch 1, wobei in der Vorrichtung zur Energieübertragung (1) die zwei aufeinander folgenden resonanten Module (25$_i$) durch eine Zweidrahtverbindung (59, 61) miteinander verbunden sind.

3. Verfahren gemäß Anspruch 2, wobei in der Vorrichtung zur Energieübertragung (1) die Zweidrahtverbindung (59, 61) ein Paar nebeneinanderliegende Drähte aufweist.

4. Verfahren gemäß Anspruch 2, wobei in der Vorrichtung zur Energieübertragung (1) die Verbindung (59, 61) eine verdrillte Leitung aufweist.

**5.** Verfahren gemäß einem der Ansprüche 1 bis 4, wobei in der Vorrichtung zur Energieübertragung (1) in jedem Modul der erste Kondensator ($C_{Ei}$) und die erste Induktivität ($L_{Ei}$) zwischen dem ersten Anschluss ($A_i$) und dem dritten Anschluss ($C_i$) in Reihe verbunden sind, wobei die zweiten ($B_i$) und vierten ($D_i$) Anschlüsse miteinander verbunden sind.

**6.** Verfahren gemäß einem der Ansprüche 1 bis 4, wobei in der Vorrichtung zur Energieübertragung (1) in jedem Modul der erste Kondensator ($C_{Ei}$) und die erste Induktivität ($L_{Ei}$) zwischen dem ersten Anschluss ($A_i$) und dem zweiten Anschluss ($B_i$) parallel verbunden sind, wobei die ersten ($A_i$) und dritten ($C_i$) Anschlüsse miteinander verbunden sind und die zweiten ($B_i$) und vierten ($D_i$) Anschlüsse miteinander verbunden sind.

**7.** Verfahren gemäß einem der Ansprüche 1 bis 4, wobei in der Vorrichtung zur Energieübertragung (1) die aufeinander folgenden Module so verbunden sind, dass in jedem Modul die Stromflussrichtung in der Induktivität ($L_{Ei}$) unterschiedlich ist von der Stromflussrichtung in der Induktivität ($L_{Ei-1}$) des vorhergehenden Moduls.

**8.** Verfahren gemäß einem der Ansprüche 1 bis 7, wobei in jedem Empfänger ($3_i$) der Resonanzkreis geeignet ist zum Bereitstellen elektrischer Leistung an eine Last ($R_{Ri}$) in Gegenwart eines elektromagnetischen Feldes, das durch die Vorrichtung zur Energieübertragung emittiert wird.

**9.** Vorrichtung gemäß einem der Ansprüche 1 bis 8, das ferner Mittel zum Aufrechterhalt einer vorbestimmten relativen Position zwischen jedem Empfänger ($3_i$) und der Vorrichtung zur Energieübertragung (1) aufweist, wobei diese Position gemäß des optimalen Kopplungswunsches zwischen dem Resonanzkreis des Empfängers ($3_i$) und einem Resonanzmodul der Energieübertragungsvorrichtung ausgewählt ist.

**10.** Vorrichtung gemäß Anspruch 9, wobei die Mittel eine Wand in Form eines hohlen Zylinders aufweisen.

**11.** Vorrichtung gemäß Anspruch 10, wobei die Wand leitende Wicklungen trägt, die die Induktivität ($L_{Ei}$) des Resonanzmoduls bilden.

**12.** Vorrichtung gemäß einem der Ansprüche 1 bis 11, die zum Aufladen von Leuchtornamenten durch elektromagnetische Kopplung geeignet ist.

**13.** Vorrichtung gemäß einem der Ansprüche 1 bis 12, wobei die Energieübertragungsvorrichtung (1) ferner Mittel aufweist zum:

Messen des Stroms oder der Ausgangsspannung des Generators (5);
hieraus Ableiten der Anzahl der Empfänger ($3_i$), die mit der Vorrichtung (1) gekoppelt sind; und
dementsprechend Anpassen der Ausgangseigenschaften des Generators (5) zum Aufrechterhalten einer konstanten Energieübertragung zu den Empfängern, und zwar unabhängig von der Anzahl der Empfänger.

**14.** Verwenden der Vorrichtung gemäß einem der Ansprüche 1 bis 13 zur gleichzeitigen elektrischen Versorgung von wenigstens zwei Lasten ($R_{Ri}$).

**Claims**

**1.** A system of power supply by electromagnetic coupling, comprising:

a device (1) for power transmission by electromagnetic coupling, comprising: a single generator (5) delivering an A.C. electric signal between two terminals; and a succession of resonant modules ($25_i$), each comprising a first capacitor ($C_{Ei}$) and a first inductance ($L_{Ei}$), and first ($A_i$), second ($B_i$), third ($C_i$), and fourth ($D_i$) terminals, the first ($A_i$) and second ($B_i$) terminals of a first module being connected across the generator, and the first ($A_i$) and second ($B_i$) terminals of the other module (s) being connected to the third ($C_i$) and fourth ($D_i$) terminals of the module of previous rank; and
at least two receivers ($3_i$) each comprising a resonant circuit comprising at least one capacitor ($C_{Ri}$) and at least one inductance ($L_{Ri}$).

**2.** The system of claim 1, wherein, in the device for power transmission (1), the two consecutive resonant modules ($25_i$) are interconnected by a two-wire connection (59, 61).

3. The system of claim 2, wherein, in the device for power transmission (1), the said two-wire connection (59, 61) comprises a pair of adjoined wires.

4. The system of claim 2, wherein, in the device for power transmission, said connection (59, 61) comprises a twisted pair of wires.

5. The system of any of claims 1 to 4, wherein, in the device for power transmission (1), in each module, the first capacitor ($C_{Ei}$) and the first inductance ($L_{Ei}$) are series-connected between the first ($A_i$) and third ($C_i$) terminals, the second ($B_i$) and fourth ($D_i$) terminals being interconnected.

6. The system of any of claims 1 to 4, wherein, in the device for power transmission (1), in each module, the first capacitor ($C_{Ei}$) and the first inductance ($L_{Ei}$) are connected in parallel between the first ($A_i$) and second ($B_i$) terminals, the first ($A_i$) and third ($C_i$) terminals being interconnected, and the second ($B_i$) and fourth ($D_i$) terminals being interconnected.

7. The system of any of claims 1 to 4, wherein, in the device for power transmission (1), the successive modules are connected so that, in each module, the current flow direction in the inductance ($L_{Ei}$) is different from the current flow direction in the inductance ($L_{Ei-1}$) of the module of previous rank.

8. The system of any of claims 1 to 7, wherein, in each receiver ($3_i$) the resonant circuit is capable of providing electric power to a load ($R_{Ri}$), in the presence of an electromagnetic field emitted by the device for power transmission.

9. The system of any of claims 1 to 8, further comprising means for maintaining a predefined relative position between each receiver ($3_i$) and the power transmission device (1), this position being selected according to the optimal coupling desired between the resonant circuit of the receiver ($3_i$) and a resonant module of the power transmission device.

10. The system of claim 9, wherein said means comprise a wall in the shape of a hollow cylinder.

11. The system of claim 10, wherein said wall supports conductive windings forming the inductances ($L_{Ei}$) of the resonant modules.

12. The system of any of claims 1 to 11, capable of recharging, by electromagnetic coupling, luminous ornaments.

13. The system of any of claims 1 to 12, wherein said power transmission device (1) further comprises means for:

measuring the current or the output voltage of said generator (5);
deducing therefrom the number of receivers ($3_i$) coupled to said device (1); and
accordingly adjusting the output characteristics of said generator (5), to maintain a constant power transfer towards the receivers, independently from the number of receivers.

14. A use of the system of any of claims 1 to 13, for simultaneously electrically powering at least two loads ($R_{Ri}$).

Fig 1

Fig 2

Fig 3A

Fig 3B

Fig 3C

Fig 3D

Fig 3E

Fig 4

Fig 5

Fig 6

**EP 2 764 603 B1**

RÉFÉRENCES CITÉES DANS LA DESCRIPTION

**Documents brevets cités dans la description**

- US 20090140691 A